# EUROPEAN PATENT SPECIFICATION

(11) **EP 3 065 329 B1**
(45) Date of publication and mention of the grant of the patent: **21.04.2021**
(21) Application number: 16159000.5
(22) Date of filing: 07.03.2016
(51) Int. Cl.: H04L 1/00

(54) **AGGREGATED DATA FRAME STRUCTURES**
AGGREGIERTE DATENRAHMENSTRUKTUREN
STRUCTURES DE TRAME DE DONNÉES AGRÉGÉES

(30) Priority: 06.03.2015 US 201562129182 P; 06.03.2016 US 201615062122
(43) Date of publication of application: 07.09.2016
(73) Proprietor: Apple Inc., Cupertino CA 95014 (US)
(72) Inventor: KIM, Joonsuk, Cupertino, CA California 95014 (US); WONG, Chiu Ngok E., Cupertino, CA California 95014 (US); MUJTABA, Syed A., Cupertino, CA California 95014 (US)
(74) Representative: Barnfather, Karl Jon

(56) References cited:
- WO-A1-2010/111628
- US-A1- 2006 078 001
- US-A1- 2009 074 010

## Description

### CROSS-REFERENCE TO RELATED APPLICATION

This application claims the benefit of U.S. Provisional Patent Application No. 62/129,182 (Atty. Docket No. APL-P26778USP1), filed March 6, 2015, titled "A-MPSDU FRAME STRUCTURE".

### BACKGROUND

Generally, frames transmitted by an Institute of Electrical and Electronics Engineers (IEEE) 802.11 device have a significant amount of overhead, including radio level headers, Media Access Control (MAC) headers, interframe spacing, and acknowledgment of transmitted frames. At higher traffic conditions, this overhead can consume more bandwidth than a payload data frame.

To address this issue, the 802.1 In standard defines two types of frame aggregation: MAC Service Data Unit (MSDU) aggregation and MAC Protocol Data Unit (MPDU) aggregation. Both types of frame aggregation group several data frames into a larger frame. Because management information is specified on a per-frame basis, a ratio of payload data to a total volume of data is higher. As a result, the larger frame leads to higher throughput.

Elowever, an aggregated MSDU contains only MSDUs whose destination and source parameter values map to the same receiver address and transmitter address values. The MSDUs are intended to be received by a single receiver and transmitted by the same transmitter. A MAC header corresponds to the aggregated MSDU. MPDU aggregation collects Ethernet frames to be transmitted to a single destination and wraps each frame in an 802.1 In MAC header. Both MSDU and MPDU aggregation techniques cannot separately decode individual constituent data units in the physical layer.

Further background information can be found in the following documents: WO 2010/111628, which describes a method of transmitting a data frame that includes transmitting a preamble, transmitting a physical layer convergence protocol (PLCP) header, and transmitting a plurality of MAC protocol data units (MPDUs).
US 2009/074010, which describes a method and apparatus for generating a data frame. The method includes: generating a plurality of subframes by using at least one medium access control (MAC) service data unit (MSDU); generating at least one field of an unequal error protection (UEP) field indicating whether UEP is applied to the subframes, a modulation and coding scheme (MCS) field indicating a modulation and coding scheme applied to each of the subframes, and a length field indicating the length of each of the subframes; and generating a data frame by using the subframes and the at least one of the UEP field, the MCS field, and the length field.

### SUMMARY

The described embodiments relate to techniques for wireless communication among electronic devices, including techniques for communicating information through a wireless local area network (WLAN) using an aggregated frame structure that aggregates multiple media access control (MAC) protocol data units (MPDUs) or multiple MAC service data units (MSDUs) into one packet or frame transmission. This is referred to as "A-MPSDU" in this disclosure. This aggregated frame structure can be used during wireless communication between electronic devices in accordance with a communication protocol, such as an IEEE 802.11 standard (which is sometimes referred to as "Wi-Fi"). For example, the aggregated frame structure may be used with IEEE 802.11ax. This communication technique can be used with a wide variety of other communication protocols, as would be understood by a person of ordinary skill in the art based on this disclosure.

In one or more embodiments of the aggregated frame structure-which can be, for example, a physical layer convergence protocol data unit (PPDU)-an interface circuit in a transmitting electronic device combines multiple MAC headers corresponding to multiple MPDUs into a single aggregated MAC header in an aggregated frame during data link layer processing. Multiple MSDUs can be included in the aggregated frame, and the MAC header information corresponding to the multiple MPDUs can be included in the aggregated MAC header. In embodiments, tasks performed by MAC and physical (PHY) layers can be intertwined. Additionally, the interface circuit can append the tail bits and the optional additional zero-padding bits to the MSDU. In embodiments, the delimiters (delim) can be removed from the aggregated frame. In some embodiments, for further protection of the aggregate MAC header, a conservative modulation coding scheme (MCS) is applied to the aggregate MAC header and not applied to a remainder of the aggregated frame (e.g., the MSDUs in the aggregated frame).

In one or more embodiments, during data link processing, the interface circuit inserts delimiters-that includes length information of one or more MPDUs-before instances of the MPDUs in an aggregated frame. The delimiters can provide length information to the physical layer for further processing. The interface circuit also appends tail bits to each of the one or more MPDUs in the aggregated frame during physical layer processing. These tail bits can ensure that a state machine associated with a detector (e.g., a Viterbi detector) in an interface circuit in a receiving electronic device returns to a zero state prior to processing the next MPDU. This can ensure that errors in the physical layer do not propagate from one MPDU to another MPDU when the aggregated frame is decoded. In some embodiments, additional zero-padding bits (e.g., two zero bits) are optionally appended to the tail bits at the end of the aggregated frame. These additional zero-padding bits can, for example, ensure that the aggregated frame is in units of orthogonal-frequency-division-multiplexing symbols.

The disclosed communication techniques can improve communication between electronic devices. For example, the disclosed communication techniques can reduce overhead, improve throughput, bound error propagation, allow an interface circuit to plan ahead when decoding an aggregated frame, allow the interface circuit to perform early packet inspection and dropping, save power, plan ahead when decoding an aggregated frame (e.g., prioritize a received frame), and allow the interface circuit to determine the quality of the aggregated frame-to name a few benefits.

The preceding summary is provided for purposes of summarizing some embodiments to provide a basic understanding of aspects of the subject matter described herein. Accordingly, the above-described features are only examples and should not be construed as narrowing the scope of the claimed subject-matter described herein in any way. Other features, aspects, and advantages of the subject matter described herein will become apparent from the following Detailed Description, Figures, and Claims.

### BRIEF DESCRIPTION OF THE DRAWINGS

The accompanying drawings are incorporated herein and form a part of the specification.
FIG. 1 is a block diagram of an example A-MPSDU frame, according to some embodiments.
FIG. 2 is a block diagram of an example A-MPSDU frame, according to some embodiments.
FIG. 3 is a block diagram of an example communication system for processing an A- MPSDU frame structure, according to some embodiments.
FIG. 3A is a data flow diagram of example data encoding for transmitting a frame, according to some embodiments.
FIG. 3B is a data flow diagram of example data decoding for receiving a frame, according to some embodiments.
FIG. 4 is a flowchart illustrating an example method for encoding and transmitting an A-MPSDU frame structure, according to some embodiments.
FIG. 5 is a block diagram of an example aggregated MAC header, according to some embodiments.
FIG. 6 is a flowchart illustrating an example method for encoding and transmitting an A-MPSDU frame structure, according to some embodiments.
FIG. 7 is a flowchart illustrating an example method for receiving and decoding an A-MPSDU frame structure, according to some embodiments.
FIG. 8 is a flowchart illustrating an example method for encoding and transmitting an A-MPSDU frame structure, according to some embodiments.
FIG. 9 is a flowchart illustrating an example method for encoding and transmitting an A-MPSDU frame structure, according to some embodiments.
FIG. 10 is a flowchart illustrating an example method for receiving and decoding an A-MPSDU frame structure, according to some embodiments.
FIG. 11 is an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, method and/or computer program product embodiments, and/or combinations and sub-combinations thereof, for processing-e.g., encoding, transmitting, receiving, and decoding-an A-MPSDU frame structure.

### Embodiments of Aggregated Data Frame Structures (A-MPSDUs)

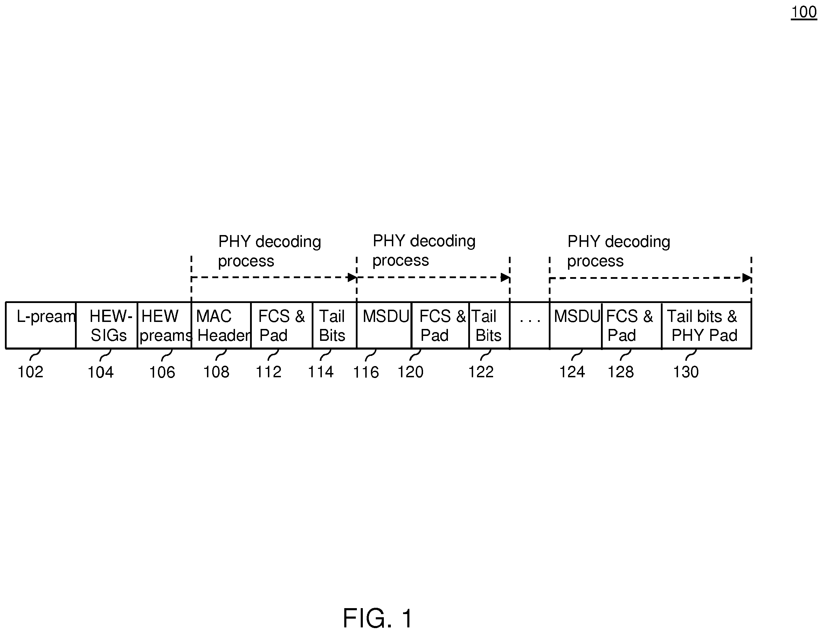

FIG. 1 is a block diagram of an example A-MPSDU frame 100, according to embodiments. A-MPSDU frame 100 aggregates a plurality of MSDU data frames. A-MPSDU frame 100 includes preamble fields L-pream 102, HEW-SIGs 104, and HEW-Pream 106. A-MPSDU frame 100 also includes the following fields: (i) an aggregate MAC Header 108; (ii) FCS & Pad fields 112, 120, and 128; (iii) tail bits fields 114 and 122; (iv) MSDUs 116 and 124; and (v) tail bits and PHY Pad field 130.

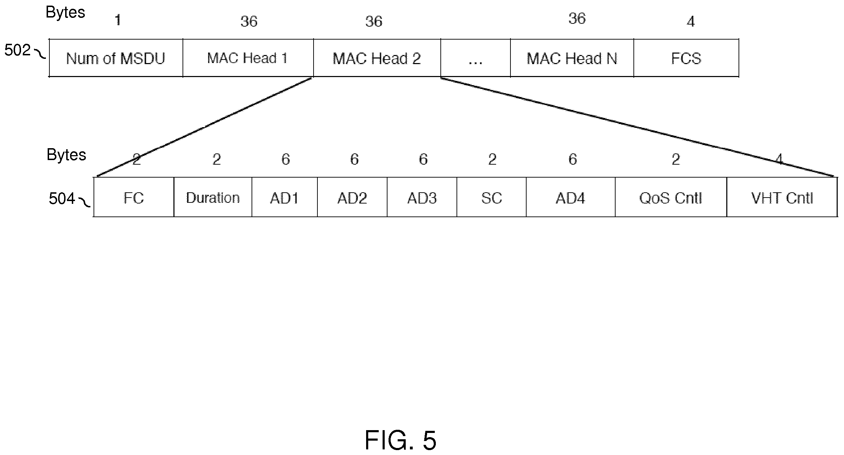

L-Pream 102 is a legacy preamble that includes information used for carrier acquisition, synchronization, or channel estimation. L-Pream 102 is identical for all users in a wireless local area network (WLAN). HEW-SIGs 104 represents signal fields used to communicate frame specific parameters (e.g., coding rate and frame length) to a receiving device. HEW-Pream 106 includes information specific to a user and contains Very High Throughput (VHT) training and signaling fields. Aggregate MAC Header 108 is further described below regarding FIG. 5. FCS & Pad fields 112, 120, and 128 each include a Frame Check Sequence (FCS) used for error-detection and additional padding (e.g., 0 to 3 bytes) that can be added to compensate for different lengths of different MSDUs.

Tail bit fields 114 and 122 are zero bits added after each MSDU and their corresponding FCS and Pad fields reset the state of a decoder (e.g., a Viterbi decoder) that processes the MSDUs to a zero state. By resetting the decoder to the zero state, decoding-error propagation from one MSDU to another MSDU can be minimized or eliminated.

An MSDU-such as MSDU 116 and 124-includes data from upper network layers-e.g., network and application layers of the OSI model of computer networking. An MPDU is an MSDU encoded with a MAC header.

Tail bits and PHY Pad 130 includes additional padding (e.g., 0-7 bits) that is added to make the length of each frame a multiple of a specific number of bytes (e.g., 4 bytes for 802.11ac) and to reset the state of the decoder to a zero state when processed by the decoder.

Although FIG. 1 depicts a certain number and arrangement of fields, the disclosed embodiments support any number of MSDUs, FCS & Pad fields, and tail bits fields.

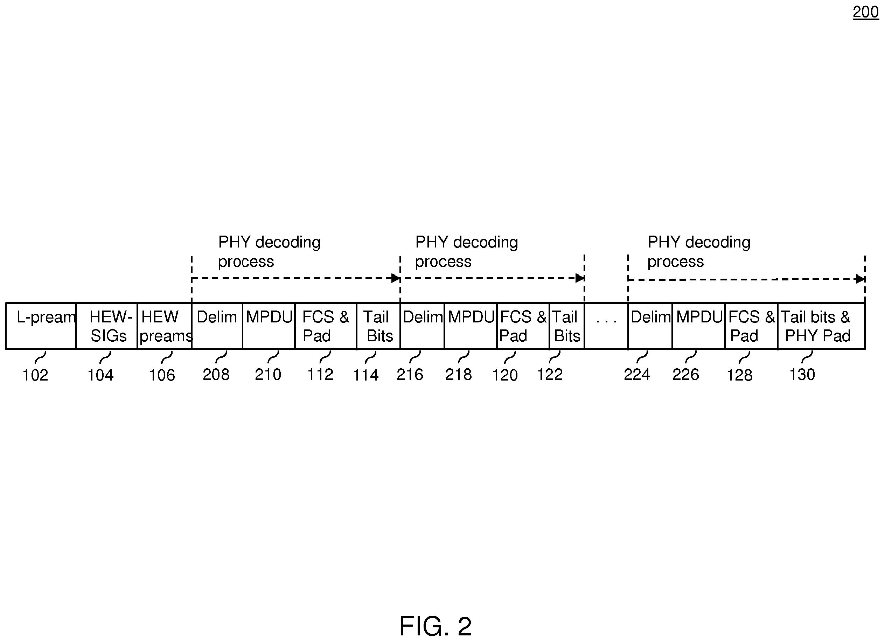

FIG. 2 is a block diagram of an example A-MPSDU frame 200, according to embodiments. A-MPSDU frame 200 aggregates a plurality of MPDU data frames. A-MPSDU frame 200 includes preamble fields L-pream 102, HEW-SIGs 104, and HEW preams 106. These fields are described above with respect to FIG. 1. A-MPSDU frame 200 also includes the following fields: (i) delimiters 208, 216, and 224; (ii) MPDUs 210, 218, and 226; (iii) FCS & Pad fields 112, 120, and 128; (iv) tail bit fields 114 and 122; (v) and tail bits and PHY Pad field 130. The fields listed in items (iii)-(v) are described above with respect to FIG 1.

Delimiters 208, 216, and 224 include information on MPDU length, cyclic redundancy checks (CRC), and a unique pattern. In embodiments, the first four bits in the delimiter can be reserved and unused. MPDU length (e.g., 12 bits) subfields are used to represent the length of a current MPDU. CRCs include reserved and length sub fields. The unique pattern can be used to find the next delimiter with minimal computation in case of a corrupted delimiter. Although FIG. 2 depicts a certain number and arrangement of fields, embodiments support any number of delimiters, MPDUs, FCS & Pad fields, and tail bits fields.

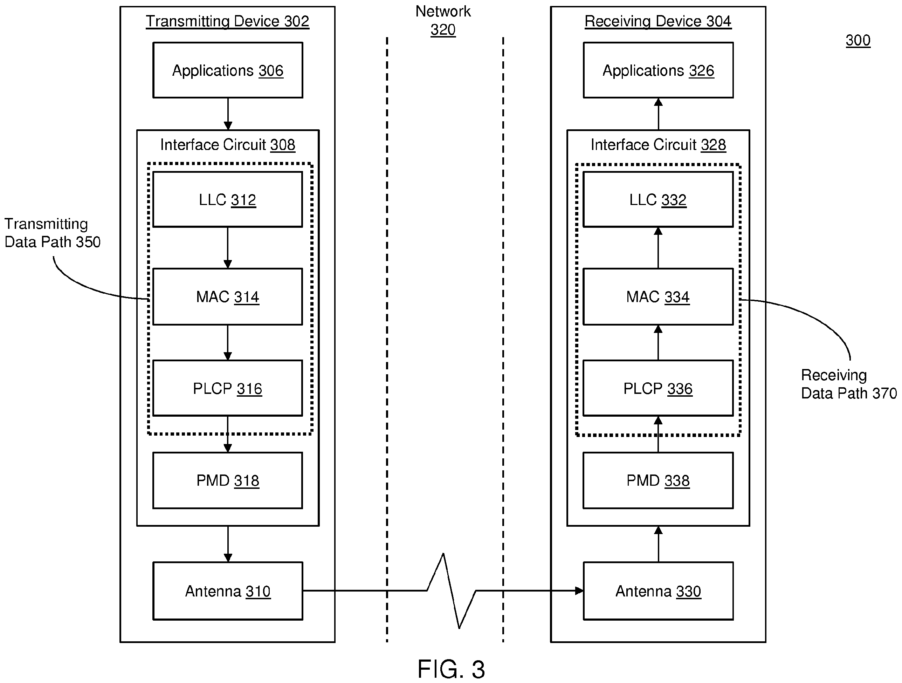

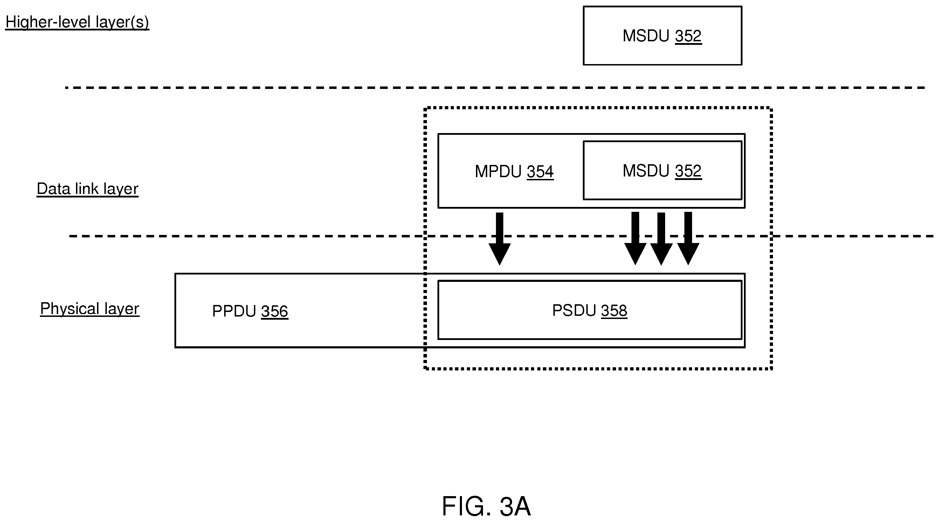

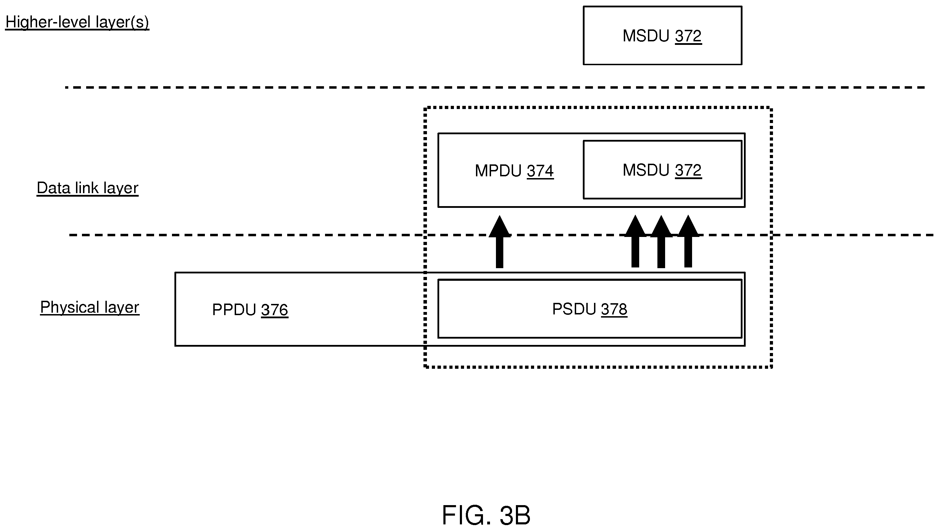

A-MPSDU frames 100 and 200 provide benefits to communication systems processing these types of aggregated data frames. These benefits include reducing communication overhead, enabling a receiver interface circuit (e.g., interface circuit 308 or 328 in FIG. 3 described below) to save power by early packet dropping (e.g., after identifying that the frame header is corrupted or that the frame is destined for another node in the WLAN), and enabling the interface circuit to perform early prioritization of higher priority frames and/or MSDUs. The description below provides further details of these benefits.

### Example Communication System to Process Embodiments of Aggregated Data Frame Structures (A-MPSDUs)

FIG. 3 is a block diagram of an example communication system 300 for processing an A-MPSDU frame structure. This processing can include, for example, encoding, transmitting, receiving, and decoding the A-MPSDU frame structure. Communication system 300 includes devices 302 and 304 and a network 320.

Devices 302 and 304 can be any electronic device such as, for example, a desktop computer, a laptop computer, a server, a media player (such as an MP3 player), an appliance, a subnotebook/netbook, a tablet computer, a smartphone, a cellular telephone, a piece of testing equipment, a network appliance, an access point, a set-top box, a personal digital assistant (PDA), a toy, a controller, a digital signal processor, a game console, a computational engine within an appliance, a consumer-electronic device, a portable computing device, a personal organizer, a sensor, a user-interface device, a router, an access point, communication equipment, or any combination thereof.

Devices 302 and 304 can communicate over network 320. Network 320 can be any network or combination of networks that support data communications. Network 320 can include, but is not limited to, a local area network, metropolitan area network, wide area network, the Internet, or any combination thereof.

Device 302 includes applications 306, an interface circuit 308, and an antenna 310. Applications 306 can include any number applications that transmit or receive network traffic. In embodiments, applications 306 include software, hardware, or any combination thereof that operate in networking layers above the data link layer. Applications 306 can transmit data to and receive data from interface circuit 308.

Interface circuit 308 encodes and decodes data transferred between applications 306 and antenna 310, according to embodiments. Interface circuit 308 includes a logical link control controller (LLC) 312, a medium access control controller (MAC) 314, a physical layer convergence protocol controller (PLCP) 316, and a physical medium dependent controller (PMD) 318. In embodiments, LLC 312 and MAC 314 operate in the data link layer of the Open System Interconnection (OSI) model of computer networking. In embodiments, PLCP 316 and PMD 318 operate in the physical layer of the OSI model of computer networking. LLC 312, MAC 314, and PLCP 316 together form a transmitting data path 350, according to embodiments.

In embodiments, interface circuit 308 receives data from applications 306, encodes the data for transmission, and sends the encoded data to antenna 310 for transmission. In the encoding process, LLC 312 receives data from network layers higher than the data link layer, encodes the data into MAC service data units (MSDUs), and sends the MSDUs to MAC 314. MAC 314 encodes the MSDUs into one or more MAC protocol data units (MPDUs) and sends the MPDUs to PLCP 316. PLCP 316 encodes the MPDUs as physical layer convergence protocol data units (PSDUs) and sends the PPDUs to PMD 318. PMD 318 encodes the PPDUs as a data bit stream and transfers the data bit stream to antenna 110 for transmission-e.g., to be received by an antenna 330 in device 304.

In embodiments, an interface circuit 328 in device 304 receives data from antenna 330, decodes the data, and sends the decoded data to applications 326 for further processing. Similar to interface circuit 308 described above, interface circuit 328 includes an LLC 132, a MAC 134, a PLCP 336, and a PMD 338. In embodiments, LLC 332 and MAC 334 operate in the data link layer of the OSI model of computer networking. In embodiments, PLCP 336 and PMD 338 operate in the physical layer of the OSI model of computer networking. LLC 332, MAC 334, and PLCP 336 together form a receiving data path 370, according to embodiments.

PMD 338 receives a data bit stream from antenna 330, decodes the data bit stream into PPDUs, and forwards the PPDUs to PLCP 336. PLCP 336 decodes the PPDUs into MPDUs and forwards the MPDUs to MAC 334. MAC 334 decodes the MPDUs into MSDUs and forwards the MSDUs to LLC 332. LLC 332 decodes the MSDUs into data for network layers higher than the data link layer and forwards the data to applications 326.

In referring to FIG. 3, each of antennas 310 and 330 can include one or more antennas and can be used to transmit and receive information from one or more electronic devices.

### Embodiments of Processing Aggregated Data Frame Structures (A-MPSDUs)

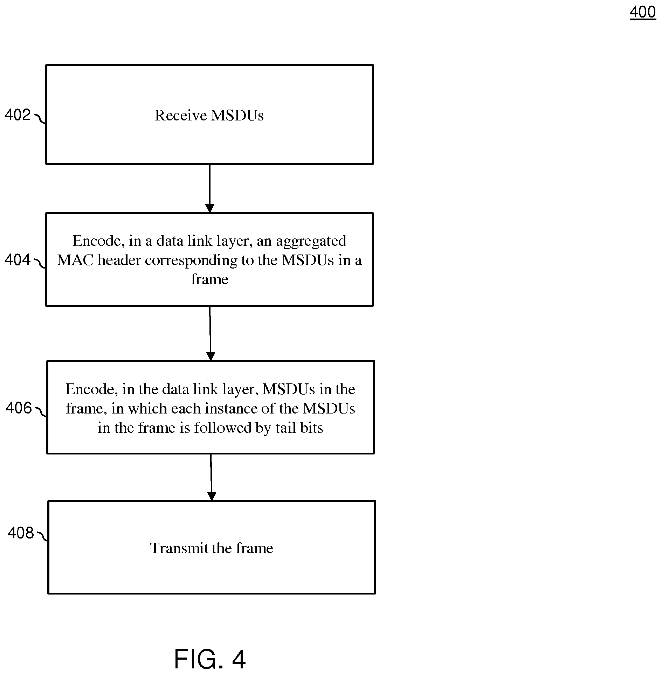

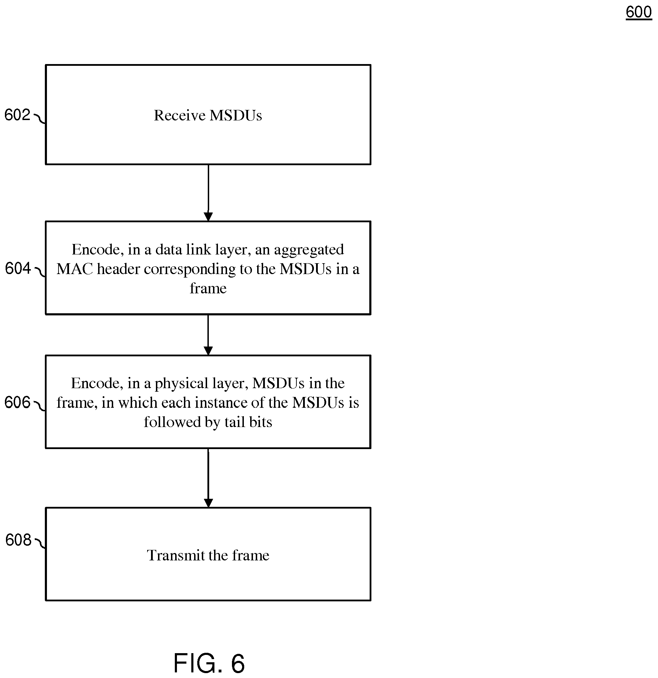

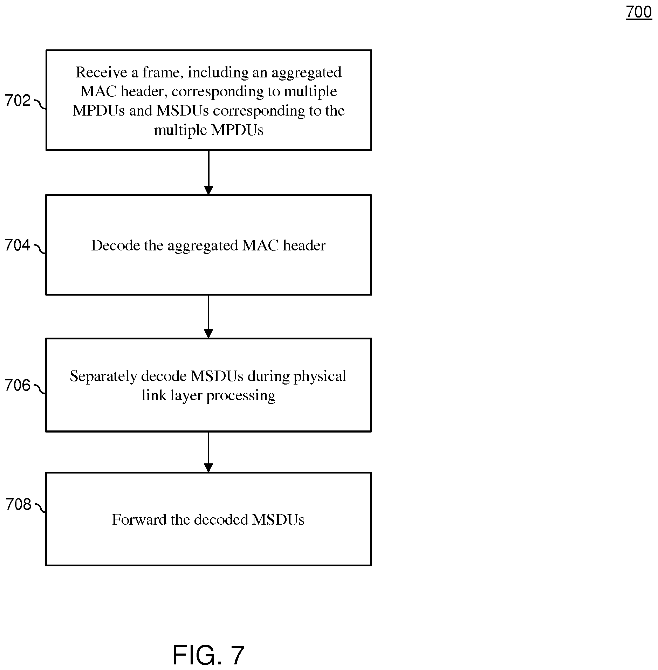

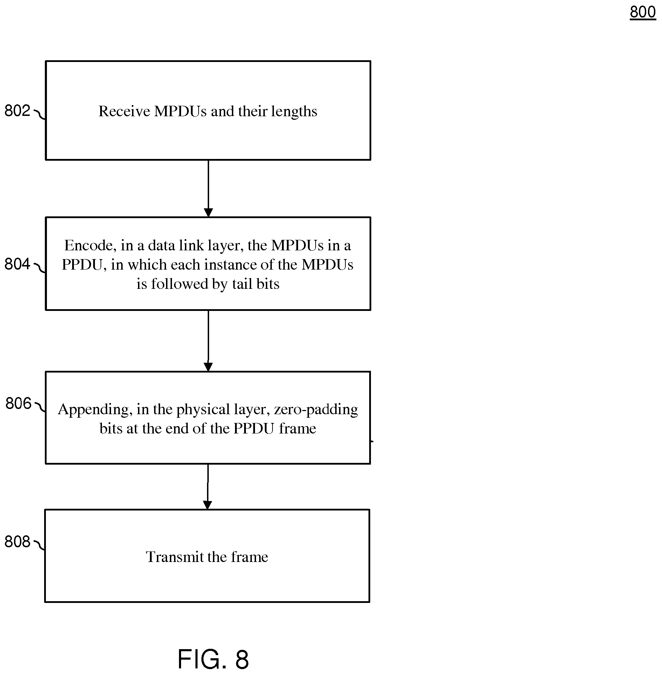

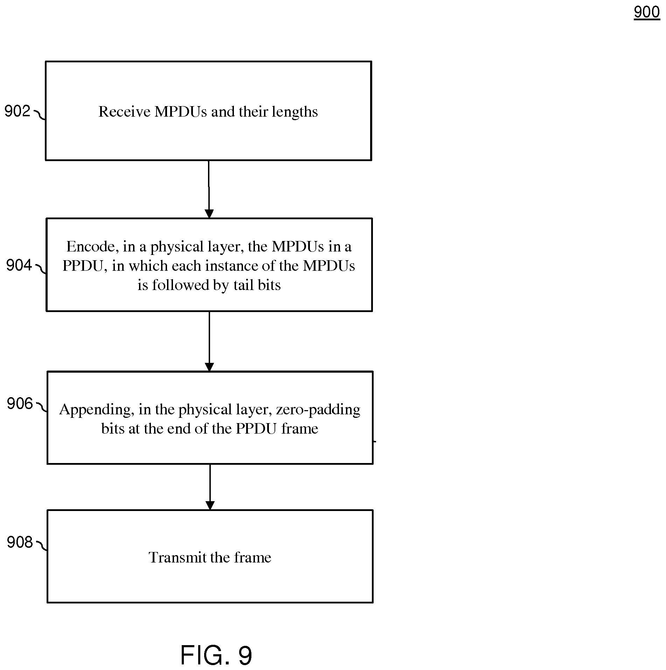

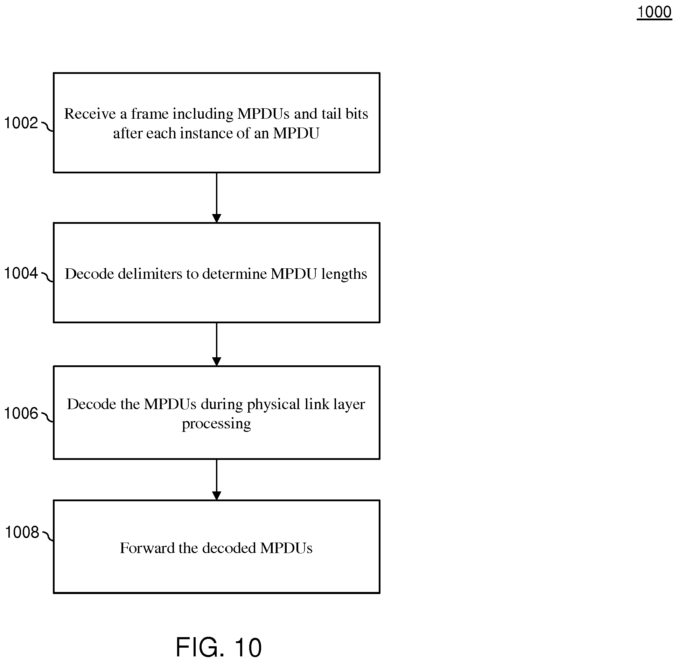

The disclosure below describes embodiments for processing-e.g., encoding and decoding-different embodiments of the aggregated data frame structure A-MPSDU described above. FIGs. 4 and 6 describe embodiments for encoding A-MPSDU frame 100 of FIG. 1. FIG. 7 describes embodiments for decoding A-MPSDU frame 100. FIGs. 8 and 9 describe embodiments for encoding A-MPSDU frame 200 of FIG. 2. And FIG. 10 describes embodiments for decoding A-MPSDU frame 200.

FIGs. 3A and 3B illustrate techniques for passing information between the data link and physical layers, according to embodiments. The information passed between the data link and physical layers can include, for example, MAC information (such as length of a PSDU), a MAC address of a transmitter, a MAC address of one or more receivers. In this manner, the information exchange breaks a hard boundary between the data link and physical layers.

FIG. 3A is a data flow diagram of example data encoding for transmitting a frame in transmitting data path 350. FIG 3A includes MSDU 352, MPDU 354, PPDU 356, and PSDU 358. MSDU 352 includes data from upper network layers-e.g., network and application layers of the OSI model of computer networking. MPDU 354 is encoded with a MAC header. PSDU 358 contains the same information as an MPDU 354 and is typically used to refer to the same content in the physical layer. PPDU 356 is encoded in physical layer preambles, such as L-Pream 102, HEW-SIGs 104, and HEW preams 106-which are shown in FIGs. 1 and 2.

In transmitting data path 350, information from the data link layer (e.g., MAC information) is encoded in MPDU 354 to be passed to the physical layer. In embodiments, in reference to FIG. 3, MAC 314 (i) receives MSDU 352 from LLC 312 and (ii) encodes (e.g., encapsulates) MSDU 352 in MPDU 354. The data link layer information can include, for example, MAC header information, tail bits, delimiters containing length information about the MPDUs or MSDUs, or any combination thereof. Techniques for encoding data link layer information in an aggregated MAC header is further described below with respect to FIGs. 4 and 6. Techniques for encoding data link layer information in delimiters is further described below with respect to FIGs. 8 and 9.

In transmitting data path 350, information from the data link layer is passed to the physical layer, which is shown in FIG. 3A by the arrows pointing from MPDU 354 to PSDU 356. In embodiments, in reference to FIG. 3, MAC 314 passes the data link layer information to the PLCP 316 in the physical layer.

In transmitting data path 350, information from the data link is received and used to build PPDU 356. In the physical layer, MPDU 354 is referred to as PSDU 358 to indicate the same information is in the physical layer. In embodiments, in reference to FIG. 3, PLCP 316 (i) receives PSDU 358 and (ii) uses the data link layer information to build PPDU 356. For example, PLCP 316 can add a preamble, a PHY header, and physical zero-padding bits to PSDU 358.

FIG. 3B is a data flow diagram of example decoding for receiving a frame in receiving data path 370. FIG 3B includes MSDU 372, MPDU 374, PPDU 376, PSDU 378. These data units contain similar information as their respective counterparts described in FIG. 3A above.

In receiving data path 370, information from the physical layer (e.g. PHY information) is decoded from PPDU 376. In embodiments, in reference to FIG. 3, PLCP 336 decodes PPDU 376 to access PSDU 378. For example, PLCP 336 can remove a preamble, a PHY header, and physical zero-padding bits from PPDU 378.

In receiving data path 370, the information from the data link layer encoded in PSDU 378 is decoded and passed to the data link layer, which is shown in FIG. 3B by the arrows pointing from PSDU 376 to MPDU 374. In embodiments, in reference to FIG. 3, PLCP 336 passes the data link layer information to the MAC 314 in the data link layer.

In receiving data path 370, information from the data link layer (e.g., MAC information) is decoded from PSDU 378 and passed to the data link layer. In embodiments, in reference to FIG. 3, MAC 334 (i) receives the PSDU 378 from PLCP 336 and (ii) decodes MSDU 372 from MPDU 374. The data link layer information can include, for example, MAC header information, length information about the MPDUs or MSDUs, or any combination thereof. Techniques for decoding data link layer information from an aggregated MAC header is further described below with respect to FIG. 7. Techniques for decoding data link layer information from delimiters is further described below with respect to FIG. 10.

Several benefits result from passing information between the data link and physical layers. This information exchange provides flexibility in processing data units in both the physical and data link layers. For example, the physical layer can utilize data link layer information received in an aggregated MAC header for encoding and decoding an A-MPSDU data frame. Further, the physical layer in a decoder can process the aggregated MAC header to determine (i) whether a frame should dropped before further processing the frame due to an error detected in the aggregated MAC header; (ii) the priority of the frame; and (iii) whether to cease processing the frame when the aggregated MAC header indicates one or more MSDUs are intended for a different destination.

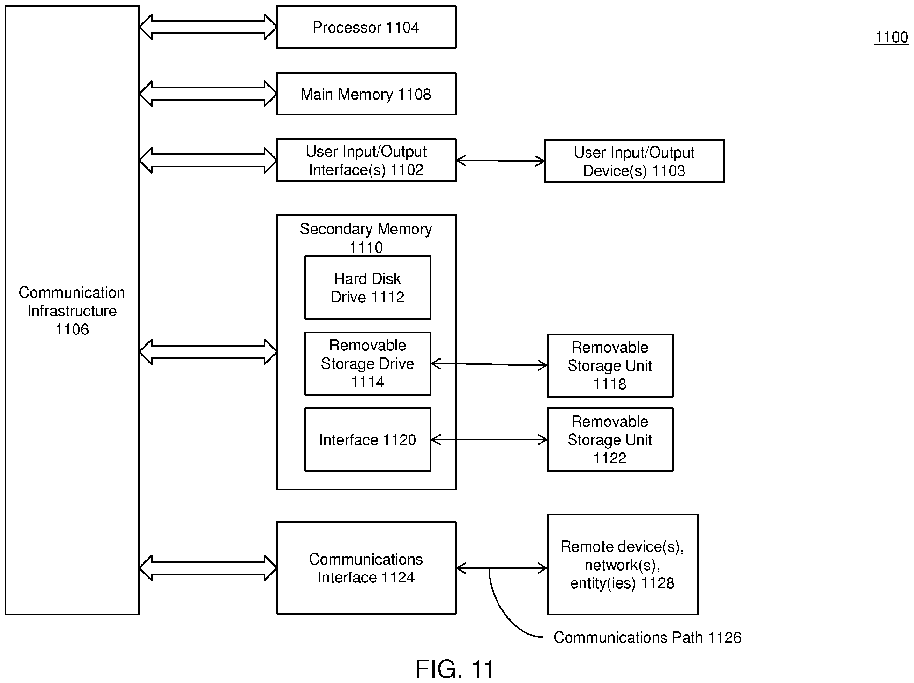

FIG. 4 is a flowchart for an example method 400 for encoding and transmitting A-MPSDU frame 100, according to embodiments. In embodiments, the encoding steps of method 400 are performed at the data link layer. Method 400 can be performed by processing logic that can include hardware (e.g., circuitry, dedicated logic, programmable logic, microcode, etc.), software (e.g., instructions run on a processing device), or a combination thereof. For example, method 400 can be performed by interface circuits 308 and 328 in FIG. 3 and/or by computer system 1100 in FIG. 11 (described below).

At block 402, an MSDU is received. In embodiments, in reference to FIG. 3, MAC 314 receives the MSDU from LLC 312.

At block 404, an aggregated MAC header corresponding to the MSDUs is encoded during data link layer processing. An example of the aggregated MAC header is aggregated MAC Header 108 in FIG. 1. In embodiments, in reference to FIG. 3, MAC 314 encodes the aggregated MAC header in the frame.

FIG. 5 is a block diagram of an aggregated MAC header 502 generated by block 304, according to embodiments. Aggregated MAC header 502 includes the following fields: (i) a number of MSDU units in A-MPSDU frame 100; (ii) information specific to each MSDU unit (shown as MAC Head 1, MAC Head 2, ..., MAC Head N); and (iii) a checksum field FCS. Example widths of these fields are shown in FIG. 5: 1 byte for the number of MSDU units (e.g., a maximum of 64 MSDUs that requires 6 bits to reflect the 64 MSDUs and an additional 2 reserve bits); 36 bytes for each of the MSDU information; and 4 bytes for FCS. Embodiments are not limited to the number of MAC Head fields and field sizes shown for aggregated MAC header 502 and can include any number of MAC Head fields and field sizes. The MAC Head fields can include information derived from MAC headers associated with each of the MSDUs. For example, in reference to FIG. 5, MAC Head 2 corresponds to the second MSDU in the frame and illustrates fields for frame control (FC), duration, administration devices (AD1-AD4), sequence control (SC), quality of service control parameters (QoS Cntl), and very-high throughput control parameters (VHT Cntl).

A modulation coding scheme (MCS) for the aggregated MAC header can be the same as or different (e.g., more conservative) than the MCS for the multiple MSDUs in A-MPSDU frame 100, according to embodiments. The MCS for the frame and for the multiple MSDUs in the frame can be specified in the frame. For example, the 802.11 protocol can use one of ten MCSs-often referred to as "MCS0" to "MCS9"-with MCS0 being the most conservative scheme. For the same signal to noise ratio (SNR), an error rate in decoding a packet encoded using an MCS with a higher index value is often greater than that of a packet encoded using an MCS with a smaller index value. Therefore, in some embodiments, the MCS applied for encoding the aggregated MAC header is selected to be more conservative-e.g., having an index value that is at least 2 less than the MCS used for encoding the data portion of A-MPSDU frame 100-to further protect the data integrity of the aggregated MAC header information and to ensure its correct detection. In another embodiment, the MCS is fixed to be MCS0 all the time, regardless of the MCS for the data portion, for simplicity.

A-MPSDU frame 100 can also exclude delimiters between the MSDUs because the aggregated MAC header specifies the length information for MPDUs corresponding to each MSDU in the frame-i.e., number of MSDU units field. The exclusion of delimiters is indicated-by the absence of delimiters-in A-MPSDU frame 100 of FIG. 1.

In FIG. 4, at block 406, the MSDUs are encoded during data link layer processing. In embodiments, in reference to FIG. 3, MAC 314 encodes each MSDU in A-MPSDU frame 100. The MSDUs can be encoded such that each instance of the MSDUs in the frame is followed by tail bits, according to embodiments. For example, each instance of the MSDUs in the frame except for the last instance in the frame can be followed by at least one FCS & Pad field and at least one tail bits field-e.g., FCS & Pad field 112 and tail bits field 114 from FIG. 1, respectively. The last instance of the MSDU in the frame can be encoded such that the last instance is followed by at least one FCS & Pad field and at least one tail bits & PHY pad field-e.g., FCS & Pad field 128 and tail bits & PHY pad field 130 from FIG. 1, respectively.

In embodiments, in reference to FIG. 3, interface circuits 308 and 328 each appends tail bits after each instance of MSDU in A-MPSDU frame 100 of FIG. 1. The tail bits ensure that a state machine associated with a detector (e.g., a Viterbi decoder) of the frame returns to a zero state prior to processing subsequent MSDUs in A-MPSDU frame 100. In embodiments, a Viterbi decoder-having a memory of the last 6 bits that were previously provided to the communication system processing A-MPSDU frame 100-can be used. For example, to flush out the decoder's 6-bit memory and to reset the corresponding state machine to a zero state, at least 6 zeroes are inputted to the decoder. In embodiments, to achieve the reset and zero state in the decoder, 6 tail bits are appended after each instance of MSDU in A-MPSDU frame 100-e.g., appended in tail bits fields 114, 122, and 130 of FIG. 1.

In embodiments, interface circuits 308 and 328 each appends additional zero-padding bits to tail bits at the end of the frame. The number of additional zero-padding bits used can be based on several different considerations. For example, in embodiments, the number of additional zero-padding bits can be chosen based on (i) the number of PDSU bits, (ii) the number of additional tail bits, (iii) the number of additional zero-padding bits, (iv) the number of modulation bits, and (v) the coding rate: [the number of PDSU bits + the number of tail bits + the number of zero-padding bits] modulo [the number of modulation bits ^{∗} the coding rate] = zero. For example, the number of modulation bits may be 1, 2, 4, 6, or 8 (depending on the type of radio modulation), and the coding rate may be 1/2, 2/3, 3/4, or 5/6. In this example, the number of appended tail bits and the optional additional zero-padding bits is determined, in part, based on the MCS. Alternatively, the number of additional zero-padding bits can be eight bits (e.g. eight zero bits (one byte)). FIG. 1 shows an example data frame that includes additional zero-padding bits in tail bits & PHY Pad 130 at the end of the frame.

In FIG. 4, at block 408, the encoded A-MPSDU frame 100 is transmitted. In reference to FIG. 3, antenna 310 in device 302 can be used to transmit the encoded A-MPSDU frame 100 to electronic device 304 over network 320.

FIG. 6 is a flowchart for an example method 600 for encoding and transmitting A-MPSDU frame 100, according to embodiments. In embodiments, the encoding steps of method 600 are performed at the data link and physical layers. Method 600 can be performed by processing logic that can include hardware (e.g., circuitry, dedicated logic, programmable logic, microcode, etc.), software (e.g., instructions run on a processing device), or a combination thereof. For example, method 600 can be performed by interface circuits 308 and 328 in FIG. 3 and/or by computer system 1100 in FIG. 11 (described below).

At block 602, an MSDU is received. In embodiments, in reference to FIG. 3, MAC 314 receives the MSDU from LLC 312.

At block 604, an aggregated MAC header corresponding to the MSDUs is encoded during data link layer processing. Block 604 is similar to block 404 in FIG. 4. An example of the aggregated MAC header is aggregated MAC Header 108 in FIG. 1, and a block diagram of a aggregated MAC header generated by block 604 is shown in FIG. 5. In embodiments, in reference to FIG. 3, MAC 314 encodes the aggregated MAC header in the frame. After encoding the aggregated MAC header, MAC 314 forwards the frame to PCLP 316 for further processing.

At block 606, the MSDUs are encoded during physical layer processing. In embodiments, in reference to FIG. 3, PLCP 316 encodes each MSDU in A-MPSDU frame 100. PLCP 316 receives the aggregated MAC header from MAC 112 and uses MSDU length information specified by the aggregated MAC header to encode each MSDU in the frame. The MSDUs can be encoded in the frame such that each instance of the MSDUs in the frame is followed by tail bits. The description of appending tail bits to the MSDUs is similar to the description above with respect to block 406 in FIG. 4.

In embodiments, encoding the MSDUs in the frame described regarding block 606 further includes appending additional zero-padding bits to tail bits at the end of the frame. As discussed above, the number of additional zero-padding bits used can be based on several different considerations. In embodiments, the number of additional zero-padding bits can be chosen based on (i) the number of PDSU bits, (ii) the number of additional tail bits, (iii) the number of additional zero-padding bits, (iv) the number of modulation bits, and (v) the coding rate: [the number of PDSU bits + the number of tail bits + the number of zero-padding bits] modulo [the number of modulation bits ^{∗} the coding rate] = zero. In embodiments, the number of additional tail bits and the optional additional zero-padding bits is determined, in part, based on the modulation coding scheme (MCS). In embodiments, number of additional zero-padding bits can be a predetermined value, such as eight bits. FIG. 1 shows an example data frame that includes additional zero-padding bits in tail bits & PHY Pad 130 at the end of the frame.

In FIG. 6, at block 608, the encoded A-MPSDU frame 100 is transmitted. In reference to FIG. 3, antenna 310 in device 302 can be used to transmit the encoded A-MPSDU frame 100 to electronic device 304 over network 320.

FIG. 7 is a flowchart for an example method 700 for receiving and decoding A-MPSDU frame 100, according to embodiments. Method 700 can be performed by processing logic that can include hardware (e.g., circuitry, dedicated logic, programmable logic, microcode, etc.), software (e.g., instructions run on a processing device), or a combination thereof. For example, method 700 can be performed by interface circuits 308 and 328 in FIG. 3 and/or by computer system 1100 in FIG. 11 (described below).

At block 702, A-MPSDU frame 100-which includes an aggregated MAC header corresponding to multiple MPDUs (and MSDUs corresponding to the multiple MPDUs)-is received. In embodiments, in reference to FIG. 3, PLCP 336 receives the frame from antenna 330 via PDM 338.

At block 704, the MAC header is decoded during physical link layer processing. In embodiments, in reference to FIG. 3, PLCP 336 decodes the MAC header.

In embodiments, a state machine associated with a detector of A-MPSDU frame 100 returns to a zero state due to processing tail bits that follow the aggregated MAC header-i.e., tail bits field 114 in FIG. 1-or tail bits that follow the MSDUs-e.g., tail bits fields 114 and 122 in FIG. 1. As a result, the tail bits field can be used to reset the state machine for physical layer decoding of each MSDU in the frame.

In embodiments, in reference to FIG. 3, interface circuit 328 determines whether a remainder of A-MPSDU frame 100 following MAC header 108 should be processed. If the remainder of the frame is not to be processed, device 304 foregoes processing the remainder of the frame. Interface circuit 328 makes this determination by monitoring for an error in A-MPSDU frame 100. For example, interface circuit 328 can determine a frame error when a frame check sequence value from FCS & Pad field 112 does not match a corresponding frame check sequence value calculated from the frame. In this manner, interface circuit 328 can determine early in the frame decoding processing that an error has occurred and avoid expending unnecessary resources for processing the remainder of an erroneous frame. Similarly, interface circuit 328 can determine packet priority from the aggregated MAC and process MSDUs with a higher priority before processing MSDUs with a lower priority.

Additionally or alternatively, interface circuit 328 can determine that the received A-MPSDU frame 100 is destined for a different device in the network. For example, interface circuit 328 can compare destination information included in the aggregated MAC header (e.g., a destination address) to an address or identifier of interface circuit 328 or device 304. Consequently, the frame can be dropped, thereby saving the processing power otherwise required to process the remainder of the frame. Upon making such determination and dropping the frame, the receiving device can enter a power save mode, according to embodiments.

In FIG. 7, at block 706, the MSDUs in A-MPSDU frame 100 are separately decoded during physical link layer processing. In embodiments, in reference to FIG. 3, PLCP 336 decodes the MSDUs. For example, PLCP 336 determines the beginning of an MSDU in the frame based on location information specified by the aggregated MAC header. PLCP 336 determines the end of an MSDU by monitoring for the presence of tail bits following the MSDUs in the frame-such as tail bits 114 or 122 or tail bits in tail bits and PHY Pad 130 in FIG. 1. In embodiments, a state machine associated with a detector of A-MPSDU frame 100 returns to a zero state prior to processing subsequent MSDUs in the frame due to processing the tail bits; this restarts the state machine for PHY decoding of each MSDU in the frame.

At block 708, the decoded MSDUs are forwarded. In embodiments, in reference to FIG. 3, PLCP 336 forwards the decoded MSDUs to MAC 334 for further processing. After further processing by MAC 334 (and possibly LLC 332), interface circuit 328 forwards the decoded data to applications 326.

FIG. 8 is a flowchart for an example method 800 for encoding and transmitting A-MPSDU frame 200 of FIG. 2, according to embodiments. Method 800 can be performed by processing logic that can include hardware (e.g., circuitry, dedicated logic, programmable logic, microcode, etc.), software (e.g., instructions run on a processing device), or a combination thereof. For example, method 800 can be performed by interface circuits 308 and 328 in FIG. 3 and/or by computer system 1100 in FIG. 11 (described below).

At block 802, MPDUs and their respective lengths are received. In embodiments, in reference to FIG. 3, MAC 314 receives the MPDUs and their respective lengths.

At block 804, the MPDUs are encoded in a PPDU frame during data link layer processing. In embodiments, in reference to FIG. 3, MAC 314 encodes each MPDU in the PPDU. The MPDUs can be encoded in A-MPSDU frame 200 such that each instance of the MPDUs in the frame is preceded by at least one delimiter, according to embodiments. Each delimiter can include information specifying the length of the following MPDU after adding the tail bits, according to embodiments. The length information will be subsequently passed to and inspected by the physical layer.

The MPDUs can be encoded such that each instance of the MPDUs in the frame is followed by tail bits. For example, each instance of the MPDUs in the frame except for the last instance in the frame can be followed by at least one FCS & Pad field and at least one tail bits field-e.g., FCS & Pad field 112 and tail bits field 114 in FIG. 2, respectively. The last instance of the MPDU in the frame can be encoded such that the last instance is followed by at least one FCS & Pad field and at least one tail bits and PHY Pad field-e.g., FCS & Pad field 128 and tail bits & PHY pad field 130 in FIG. 2, respectively.

At block 806, additional zero-padding bits are appended at the end of the frame during physical layer processing. In embodiments, in reference to FIG. 3, PLCP 316 appends the additional zero-padding bits to tail bits & PHY Pad field 130 in FIG. 2. As discussed above, the number of additional zero-padding bits can be chosen based on (i) the number of PDSU bits, (ii) the number of additional tail bits, (iii) the number of additional zero-padding bits, (iv) the number of modulation bits, and (v) the coding rate: [the number of PDSU bits + the number of tail bits + the number of zero-padding bits] modulo [the number of modulation bits ^{∗} the coding rate] = zero. In embodiments, the number of additional tail bits and the optional additional zero-padding bits is determined, in part, based on the modulation coding scheme (MCS). In embodiments, the number of additional tail bits can be a predetermined value, such as eight bits. FIG. 2 shows an example data frame that includes additional zero-padding bits in tail bits & PHY Pad 130 at the end of the frame.

At block 808, the encoded A-MPSDU frame 200 is transmitted. In reference to FIG. 3, antenna 310 in device 302 can be used to transmit the encoded A-MPSDU frame 200 to electronic device 304 over network 320.

FIG. 9 is a flowchart for an example method 900 for encoding and transmitting A-MPSDU frame 200, according to embodiments. Method 900 can be performed by processing logic that can include hardware (e.g., circuitry, dedicated logic, programmable logic, microcode, etc.), software (e.g., instructions run on a processing device), or a combination thereof. For example, method 900 can be performed by interface circuits 308 and 328 in FIG. 3 and/or by computer system 1100 in FIG. 11 (described below).

At block 902, MPDUs and their respective lengths are received. In embodiments, in reference to FIG. 3, MAC 314 receives the MPDUs and their respective lengths.

At block 904, the MPDUs are encoded in a PPDU frame during physical layer processing. In embodiments, in reference to FIG. 3, PLCP 316 encodes each MPDU in the PPDU. The MPDUs can be encoded in A-MPSDU frame 200 such that each instance of the MPDUs in the frame is preceded by at least one delimiter, according to embodiments. Each delimiter can include information specifying the length of the following MPDU, according to embodiments. In embodiments, MAC 314 encodes the delimiters in the frame, and PLCP 316 receives the frame with the delimiters (including MPDU length information) from MAC 314.

The MPDUs can be encoded such that each instance of the MPDUs in the frame is followed by tail bits. For example, each instance of the MPDUs in the frame except for the last instance in the frame can be followed by at least one FCS & Pad field and at least one tail bits field-e.g., FCS & Pad field 112 and tail bits field 114 in FIG. 2, respectively. The last instance of the MPDU in the frame can be encoded such that the last instance is followed by at least one FCS & Pad field and at least one tail bits and PHY Pad field. The tail bits can be appended during physical-layer processing (e.g., by PLCP 116)-e.g., FCS & Pad field 128 and tail bits & PHY pad field 130 in FIG. 2, respectively.

At block 906, additional zero-padding bits are appended at the end of the frame during physical layer processing. Block 906 is similar to block 806 in FIG. 8. In embodiments, in reference to FIG. 3, PLCP 316 appends the additional zero-padding bits to tail bits & PHY Pad field 130 in FIG. 2. As discussed above, the number of additional zero-padding bits can be chosen based on (i) the number of PDSU bits, (ii) the number of additional tail bits, (iii) the number of additional zero-padding bits, (iv) the number of modulation bits, and (v) the coding rate: [the number of PDSU bits + the number of tail bits + the number of zero-padding bits] modulo [the number of modulation bits ^{∗} the coding rate] = zero. In embodiments, the number of additional tail bits and the optional additional zero-padding bits is determined, in part, based on the modulation coding scheme (MCS). In embodiments, the number of zero-padding bits can be a predetermined value, such as eight bits. FIG. 2 shows an example data frame that includes additional zero-padding bits in tail bits & PHY Pad 130 at the end of the frame.

At block 908, the encoded A-MPSDU frame 200 is transmitted. Block 908 is similar to block 808. In reference to FIG. 3, antenna 310 in device 302 can be used to transmit the encoded A-MPSDU frame 200 to electronic device 304 over network 320.

FIG. 10 is a flowchart for an example method 1000 for receiving and decoding A-MPSDU frame 200, according to embodiments. Method 1000 can be performed by processing logic that can include hardware (e.g., circuitry, dedicated logic, programmable logic, microcode, etc.), software (e.g., instructions run on a processing device), or a combination thereof. For example, method 1000 can be performed by interface circuits 308 and 328 in FIG. 3 and/or by computer system 1100 in FIG. 11 (described below).

At block 1002, A-MPSDU frame 200-including MPDUs, tail bits after each instance of an MPDU, and delimiters before each instance of an MPDU-is received. In embodiments, in reference to FIG. 3, PLCP 336 receives the frame from antenna 330 via PDM 338.

At block 1004, the delimiters are separately decoded during physical link layer processing. In embodiments, in reference to FIG. 3, PLCP 336 decodes the delimiters. For example, PLCP 336 monitors for the presence of a delimiter in A-MPSDU frame 200, such as delimiters 208, 216, and 224 in FIG. 2. PLCP 336 determines the length of the MPDU following the delimiter from a value stored in the delimiter, according to embodiments.

At block 1006, the MPDUs are separately decoded during physical link layer processing. In embodiments, in reference to FIG. 3, PLCP 336 decodes the MPDUs. For example, PLCP 336 determines the beginning of a MPDU based on detecting the presence of a delimiter in the frame, such as delimiters 208, 216, and 224 in FIG. 2. PLCP 336 determines the end of a MPDU by using the MPDU length specified by the delimiter and determining the presence of tail bits following the MPDUs in the frame (such as tail bits 114 or 122 or tail bits in tail bits and PHY Pad 130 in FIG. 2). In embodiments, a state machine associated with a detector of A-MPDSU frame 200 returns to a zero state prior to processing subsequent MPDUs in the frame due to processing the tail bits; this restarts the state machine for PHY decoding of each MPDU in the frame.

At block 1008, the decoded MPDUs are forwarded. In embodiments, in reference to FIG. 3, PLCP 336 forwards the decoded MPDUs to MAC 334 for further processing. After further processing by MAC 334 (and possibly LLC 332), interface circuit 328 forwards the decided data to application 326.

### Example Computer System to Process Embodiments of Aggregated Data Frame Structures (A-MPSDUs)

Various embodiments can be implemented, for example, using one or more well-known computer systems, such as computer system 1100 shown in FIG. 11. Computer system 1100 can be any well-known computer capable of performing the functions described herein.

Computer system 1100 includes one or more processors (also called central processing units, or CPUs), such as a processor 1104. Processor 1104 is connected to a communication infrastructure or bus 1106.

One or more processors 1104 may each be a graphics processing unit (GPU). In embodiments, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1100 also includes user input/output device(s) 1103, such as monitors, keyboards, pointing devices, etc., that communicate with communication infrastructure 1106 through user input/output interface(s) 1102.

Computer system 1100 also includes a main or primary memory 1108, such as random access memory (RAM). Main memory 1108 may include one or more levels of cache. Main memory 1108 has stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114. Removable storage drive 1114 may be a floppy disk drive, a magnetic tape drive, a compact disk drive, an optical storage device, tape backup device, and/or any other storage device/drive.

Removable storage drive 1114 may interact with a removable storage unit 1118. Removable storage unit 1118 includes a computer usable or readable storage device having stored thereon computer software (control logic) and/or data. Removable storage unit 1118 may be a floppy disk, magnetic tape, compact disk, DVD, optical storage disk, and/ any other computer data storage device. Removable storage drive 1114 reads from and/or writes to removable storage unit 1118 in a well-known manner.

According to embodiments, secondary memory 1110 may include other means, instrumentalities or other approaches for allowing computer programs and/or other instructions and/or data to be accessed by computer system 1100. Such means, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 enables computer system 1100 to communicate and interact with any combination of remote devices, remote networks, remote entities, etc. (individually and collectively referenced by reference number 1128). For example, communication interface 1124 may allow computer system 1100 to communicate with remote devices 1128 over communications path 1126, which may be wired and/or wireless, and which may include any combination of LANs, WANs, the Internet, etc. Control logic and/or data may be transmitted to and from computer system 1100 via communication path 1126.

In embodiments, a tangible apparatus or article of manufacture comprising a tangible computer useable or readable medium having control logic (software) stored thereon is also referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), causes such data processing devices to operate as described herein.

### Conclusion

Based on the teachings contained in this disclosure, it will be apparent to persons skilled in the relevant art(s) how to make and use embodiments of the invention using data processing devices, computer systems and/or computer architectures other than that shown in FIG. 11. In particular, embodiments may operate with software, hardware, and/or operating system implementations other than those described herein.

While the present disclosure has been described herein with reference to exemplary embodiments for exemplary fields and applications, it should be understood that the disclosure is not limited thereto. Other embodiments and modifications thereto are possible, and are within the scope of the appended claims. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments may perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The breadth and scope of the present disclosure should not be limited by any of the above-described exemplary embodiments, but should be defined only in accordance with the following claims.

## Claims

1. An electronic device (302), comprising:
an antenna; and
an interface circuit (308) coupled to the antenna and configured to communicate with another electronic device (304) and to:
combine a plurality of media access control headers corresponding to a plurality of media access control service data units into an aggregated media access control header, wherein the aggregated media access control header comprises at least a receiver address, a transmitter address-, and length information corresponding to the plurality of the media access control service data units;
insert the aggregated media access control header into a first portion of a frame;
insert the plurality of media access control service data units into a second portion of the frame, wherein the plurality of media access control service data units are inserted after the aggregated media access control header inserted into the first portion of the frame;
append one or more tail bits to the frame after at least one of the plurality of media access control service data units in the frame, wherein the one or more tail bits reset a decoder to a zero state in response to the frame being decoded; and
transmit the frame.

2. The electronic device (302) of claim 1, wherein the interface circuit (308) is configured to combine the plurality of media access control headers into the aggregated media access control header during data link layer processing of the frame.

3. The electronic device (302) of claim 1, wherein a modulation coding scheme of the aggregated media access control header specified in the frame is different than a modulation coding scheme of the media access control service data units specified in the frame.

4. The electronic device (302) of claim 1, wherein :
the interface circuit (308) is configured to append the one or more the tail bits during physical layer processing; and/or
the interface circuit (308) is configured to append the one or more tail bits during data link layer processing.

5. A method, comprising:
combining, by an interface circuit (308) coupled to an antenna, a plurality of media access control headers corresponding to a plurality of media access control service data units into an aggregated media access control header, wherein the aggregated media access control header comprises at least a receiver address, a transmitter address-, and length information corresponding to the plurality of media access control service data units;
inserting, by the interface circuit (308), the aggregated media access control header into a first portion of a frame;
inserting, by the interface circuit (308), the plurality of media access control service data units into a second portion of the frame, wherein the plurality of media access control service data units are inserted after the aggregated media access control header inserted into the first portion of the frame;
appending, by the interface circuit (308), one or more tail bits to the frame after at least- one of the plurality of media access control service data units in the frame, wherein the one or more tail bits reset a decoder to a zero state in response to the frame being decoded; and
transmitting the frame.

6. The method of claim 5, wherein the combining comprises combining the plurality of media access control headers into the aggregated media access control header during data link layer processing of the media access control service data units.

7. The method of claim 5, wherein a modulation coding scheme of the aggregated media access control header specified in the frame is different than a modulation coding scheme of the at least one of the plurality of media access control service data units specified in the frame.

8. The method of claim 5, wherein the appending comprises appending the one or more tail bits during physical layer processing,
wherein the appending comprises appending the one or more tail bits during data link layer processing; and/or
appending physical layer zero-padding to an end of the frame prior to transmitting the frame.

9. An electronic device (302), comprising:
an antenna; and
an interface circuit (308) coupled to the antenna and configured to:
receive, via the antenna, a frame that includes a plurality of media access control service data units and an aggregated media access control header comprising a combination of a plurality of media access control headers corresponding to the plurality of media access control service data units, and one or more tail bits after at least one of the plurality of media access control service data units in the frame,
wherein the aggregated media access control header is in a first portion of the frame and comprises at least a receiver address-, a_transmitter address-, and length information corresponding to the plurality of media access control service data units;
wherein the plurality of media access control service data units are included in a second portion of the frame after the aggregated media access control header in the first portion of the frame;
decode the aggregated media access control header to access the length information for the plurality of media access control service data units in the frame;
decode the at least one of the plurality of media access control service data units separately from one another; and
forward the decoded media access control service data unit to a data link layer.

10. The electronic device (302) of claim 9, wherein the interface circuit (308) is configured to decode the aggregated media access control header during physical layer processing; and/or
wherein the interface circuit (308) is configured to decode the media access control service data units during physical layer processing.

11. The electronic device (302) of claim 9, wherein the interface circuit (308) comprises a state machine associated with a detector of the frame, and wherein the state machine is configured to return to a zero state based at least in part on the one or more tail bits prior to processing subsequent media access control service data units in the frame.

12. The electronic device (302) of claim 9, wherein the interface circuit (308) is further configured to:
determine that the electronic device (302) is not a destination for at least one media access control service data unit of the plurality of media access control service data units based at least in part on destination information stored in the aggregated media access control header; and
drop the frame in response to determining the electronic device (302) is not the destination for the at least one media access control service data unit of the plurality of media access control service data units; and/or
wherein the interface circuit (308) is further configured to:
detect an error in the frame based at least in part on the aggregated media access control header; and
drop the frame in response to detecting the error.

13. A method, comprising:
receiving, by an antenna, a frame that includes a plurality of media access control service data units, an aggregated media access control header comprising a combination of a plurality of media access control headers corresponding to the plurality of media access control service data units, and one or more tail bits after at least one of the plurality of media access control service data units,
wherein the aggregated media access control header is in a first portion of the frame and comprises at least a receiver address-, a transmitter address-, and length information corresponding to the plurality media access control service data units;
wherein the plurality of media access control service data units are included in a second portion of the frame after the aggregated media access control header in the first portion of the frame;
decoding, by an interface circuit (308), the aggregated media access control header to access the length information for the plurality of media access control service data units in the frame;
decoding, by the interface circuit (308), the at least one of the plurality of media access control service data units separately from one another; and
forwarding, by the interface circuit (308), the decoded media access control service data unit to a data link layer.

14. The method of claim 13, wherein the decoding the aggregated media access control header comprises decoding the aggregated media access control header during physical layer processing; and/or
wherein the decoding the at least one of the plurality of media access control service data units comprises decoding the media access control service data units during data link layer processing.

15. The method of claim 13, wherein the decoding each of the media access control service data units comprises resetting a state machine associated with a detector of the frame to a zero state based at least in part on the one or more tail bits prior to processing subsequent media access control service data units in the frame.

16. The method of claim 13, further comprising:
determining that the interface circuit (308) is not a destination for at least one media access control service data unit of the plurality of media access control service data units based at least in part on the aggregated media access control header; and
dropping the frame in response to determining the interface circuit (308) is not the destination for the at least one media access control service data unit of the plurality of media access control service data units; and/or
detecting an error in the frame based at least in part on the aggregated media access control header; and
dropping the frame in response to detecting the error.

## Patentansprüche

1. Elektronische Vorrichtung (302), umfassend:
eine Antenne; und
eine Schnittstellenschaltung (308), die mit der Antenne gekoppelt und konfiguriert ist zum Kommunizieren mit einer anderen elektronischen Vorrichtung (304) und zum:
Kombinieren einer Vielzahl von Medienzugriffssteuerungs-Headern, die einer Vielzahl von Medienzugriffssteuerungs-Dienstdateneinheiten entsprechen, zu einem aggregierten Medienzugriffssteuerungs-Header, wobei der aggregierte Medienzugriffssteuerungs-Header mindestens eine Empfängeradresse, eine Senderadresse und Längeninformation entsprechend der Vielzahl von Medienzugriffssteuerungs-Dienstdateneinheiten umfasst;
Einfügen des aggregierten Medienzugriffssteuerungs-Headers in einen ersten Abschnitt eines Rahmens;
Einfügen der Vielzahl von Medienzugriffssteuerungs-Dienstdateneinheiten in einen zweiten Abschnitt des Rahmens, wobei die Vielzahl von Medienzugriffssteuerungs-Dienstdateneinheiten nach dem aggregierten Medienzugriffssteuerungs-Header eingefügt werden, der in den ersten Abschnitt des Rahmens eingefügt wurde;
Anhängen eines oder mehrerer Tail-Bits an den Rahmen nach mindestens einer der Vielzahl von Medienzugriffssteuerungs-Dienstdateneinheiten in dem Rahmen, wobei das eine oder die mehreren Tail-Bits einen Decoder als Reaktion darauf, dass der Rahmen dekodiert wird, auf einen Null-Zustand zurücksetzen; und
Übertragen des Rahmens.

2. Elektronische Vorrichtung (302) nach Anspruch 1, wobei die Schnittstellenschaltung (308) konfiguriert ist zum Kombinieren der Vielzahl von Medienzugriffssteuerungs-Headern in den aggregierten Medienzugriffssteuerungs-Header während Sicherungsschicht-Verarbeitung des Rahmens.

3. Elektronische Vorrichtung (302) nach Anspruch 1, wobei ein Modulationskodierungsschema des aggregierten Medienzugriffssteuerungs-Headers, der in dem Rahmen spezifiziert ist, verschieden ist von einem Modulationskodierungsschema der Medienzugriffssteuerungs-Dienstdateneinheiten, die in dem Rahmen spezifiziert sind.

4. Elektronische Vorrichtung (302) nach Anspruch 1, wobei:
die Schnittstellenschaltung (308) konfiguriert ist zum Anhängen des einen oder der mehreren Tail-Bits während Bitübertragungsschicht-Verarbeitung; und/oder
die Schnittstellenschaltung (308) konfiguriert ist zum Anhängen des einen oder der mehreren Tail-Bits während Sicherungsschicht-Verarbeitung.

5. Verfahren, umfassend:
Kombinieren, durch eine mit einer Antenne gekoppelten Schnittstellenschaltung (308), einer Vielzahl von Medienzugriffssteuerungs-Headern, die einer Vielzahl von Medienzugriffssteuerungs-Dienstdateneinheiten entsprechen, zu einem aggregierten Medienzugriffssteuerungs-Header, wobei der aggregierte Medienzugriffssteuerungs-Header mindestens eine Empfängeradresse, eine Senderadresse und Längeninformation entsprechend der Vielzahl von Medienzugriffssteuerungs-Dienstdateneinheiten umfasst;
Einfügen, durch die Schnittstellenschaltung (308), des aggregierten Medienzugriffssteuerungs-Headers in einen ersten Abschnitt eines Rahmens;
Einfügen, durch die Schnittstellenschaltung (308), der Vielzahl von Medienzugriffssteuerungs-Dienstdateneinheiten in einen zweiten Abschnitt des Rahmens, wobei die Vielzahl von Medienzugriffssteuerungs-Dienstdateneinheiten nach dem aggregierten Medienzugriffssteuerungs-Header eingefügt werden, der in den ersten Abschnitt des Rahmens eingefügt wurde;
Anhängen, durch die Schnittstellenschaltung (308), eines oder mehrerer Tail-Bits an den Rahmen nach mindestens einer der Vielzahl von Medienzugriffssteuerungs-Dienstdateneinheiten in dem Rahmen, wobei das eine oder die mehreren Tail-Bits einen Decoder als Reaktion auf die Dekodierung des Rahmens in einen Null-Zustand zurücksetzen; und
Übertragen des Rahmens.

6. Verfahren nach Anspruch 5, wobei das Kombinieren Kombinieren der Vielzahl von Medienzugriffssteuerungs-Headern zu dem aggregierten Medienzugriffssteuerungs-Header während Sicherungsschicht-Verarbeitung der Medienzugriffssteuerungs-Dienstdateneinheiten umfasst.

7. Verfahren nach Anspruch 5, wobei ein Modulationskodierungsschema des aggregierten Medienzugriffssteuerungs-Headers, der in dem Rahmen spezifiziert ist, verschieden ist von einem Modulationskodierungsschema der mindestens einen der Vielzahl von Medienzugriffssteuerungs-Dienstdateneinheiten, die in dem Rahmen spezifiziert sind.

8. Verfahren nach Anspruch 5, wobei das Anhängen Anhängen des einen oder der mehreren Tail-Bits während Bitübertragungsschicht-Verarbeitung umfasst,
wobei das Anhängen Anhängen des einen oder der mehreren Tail-Bits während Sicherungsschicht-Verarbeitung umfasst; und/oder
Anhängen von Bitübertragungsschicht-Null-Padding an ein Ende des Rahmens vor dem Übertragen des Rahmens.

9. Elektronische Vorrichtung (302), umfassend:
eine Antenne; und
eine Schnittstellenschaltung (308), die mit der Antenne gekoppelt ist und konfiguriert ist zum:
Empfangen, über die Antenne, eines Rahmens, der eine Vielzahl von Medienzugriffssteuerungs-Dienstdateneinheiten und einen aggregierten Medienzugriffssteuerungs-Header beinhaltet, der eine Kombination aus einer Vielzahl von Medienzugriffssteuerungs-Headern, die der Vielzahl von Medienzugriffssteuerungs-Dienstdateneinheiten entsprechen, und einen oder mehrere Tail-Bits nach mindestens einer der Vielzahl von Medienzugriffssteuerungs-Dienstdateneinheiten in dem Rahmen umfasst,
wobei der aggregierte Medienzugriffssteuerungs-Header sich in einem ersten Abschnitt des Rahmens befindet und mindestens eine Empfängeradresse, eine Senderadresse, und Längeninformation entsprechend der Vielzahl von Medienzugriffssteuerungs-Dienstdateneinheiten umfasst;
wobei die Vielzahl von Medienzugriffssteuerungs-Dienstdateneinheiten in einem zweiten Abschnitt des Rahmens nach dem aggregierten Medienzugriffssteuerungs-Header in dem ersten Abschnitt des Rahmens beinhaltet ist;
Dekodieren des aggregierten Medienzugriffssteuerungs-Headers, um auf die Längeninformation für die Vielzahl von Medienzugriffssteuerungs-Dienstdateneinheiten in dem Rahmen zuzugreifen;
Dekodieren der mindestens einen aus der Vielzahl von Medienzugriffssteuerungs-Dienstdateneinheiten getrennt voneinander; und
Weiterleiten der dekodierten Medienzugriffssteuerungs-Dienstdateneinheit an eine Sicherungsschicht.

10. Elektronische Vorrichtung (302) nach Anspruch 9, wobei die Schnittstellenschaltung (308) konfiguriert ist zum Dekodieren des aggregierten Medienzugriffssteuerungs-Headers während Bitübertragungsschicht-Verarbeitung; und/oder
wobei die Schnittstellenschaltung (308) konfiguriert ist zum Dekodieren der Medienzugriffssteuerungs-Dienstdateneinheiten während Bitübertragungsschicht-Verarbeitung.

11. Elektronische Vorrichtung (302) nach Anspruch 9, wobei die Schnittstellenschaltung (308) eine Zustandsmaschine umfasst, die mit einem Detektor des Rahmens verknüpft ist, und wobei die Zustandsmaschine konfiguriert ist, um in einen Null-Zustand zurückzukehren, basierend zumindest teilweise auf dem einen oder den mehreren Tail-Bits, bevor nachfolgende Medienzugriffssteuerungs-Dienstdateneinheiten in dem Rahmen verarbeitet werden.

12. Elektronische Vorrichtung (302) nach Anspruch 9, wobei die Schnittstellenschaltung (308) ferner konfiguriert ist zum:
Bestimmen, dass die elektronische Vorrichtung (302) kein Ziel für mindestens eine Medienzugriffssteuerungs-Dienstdateneinheit der Vielzahl von Medienzugriffssteuerungs-Dienstdateneinheiten ist, basierend zumindest teilweise auf Zielinformation, die in dem aggregierten Medienzugriffssteuerungs-Header gespeichert ist; und
Verwerfen des Rahmens in Reaktion auf Bestimmen, dass die elektronische Vorrichtung (302) nicht das Ziel für die mindestens eine Medienzugriffssteuerungs-Dienstdateneinheit der Vielzahl von Medienzugriffssteuerungs-Dienstdateneinheiten ist; und/oder wobei die Schnittstellenschaltung (308) ferner konfiguriert ist zum:
Erfassen eines Fehlers in dem Rahmen, basierend zumindest teilweise auf dem aggregierten Medienzugriffssteuerungs-Header; und
Verwerfen des Rahmens in Reaktion auf Erfassen des Fehlers.

13. Verfahren, umfassend:
Empfangen, durch eine Antenne, eines Rahmens, der eine Vielzahl von Medienzugriffssteuerungs-Dienstdateneinheiten, einen aggregierten Medienzugriffssteuerungs-Header, der eine Kombination aus einer Vielzahl von Medienzugriffssteuerungs-Headern entsprechend der Vielzahl von Medienzugriffssteuerungs-Dienstdateneinheiten umfasst, und ein oder mehrere Tail-Bits nach mindestens einer aus der Vielzahl von Medienzugriffssteuerungs-Dienstdateneinheiten beinhaltet,
wobei der aggregierte Medienzugriffssteuerungs-Header sich in einem ersten Abschnitt des Rahmens befindet und mindestens eine Empfängeradresse, eine Senderadresse und Längeninformation entsprechend der Vielzahl von Medienzugriffssteuerungs-Dienstdateneinheiten umfasst;
wobei die Vielzahl von Medienzugriffssteuerungs-Dienstdateneinheiten in einem zweiten Abschnitt des Rahmens nach dem aggregierten Medienzugriffssteuerungs-Header in dem ersten Abschnitt des Rahmens beinhaltet ist;
Dekodieren, durch eine Schnittstellenschaltung (308), des aggregierten Medienzugriffssteuerungs-Headers zum Zugreifen auf die Längeninformation für die Vielzahl von Medienzugriffssteuerungs-Dienstdateneinheiten in dem Rahmen;
Dekodieren, durch die Schnittstellenschaltung (308), der mindestens einen der Vielzahl von Medienzugriffssteuerungs-Dienstdateneinheiten getrennt voneinander; und
Weiterleiten, durch die Schnittstellenschaltung (308), der dekodierten Medienzugriffssteuerungs-Dienstdateneinheit an eine Sicherungsschicht.

14. Verfahren nach Anspruch 13, wobei das Dekodieren des aggregierten Medienzugriffssteuerungs-Headers Dekodieren des aggregierten Medienzugriffssteuerungs-Headers während Bitübertragungsschicht-Verarbeitung umfasst; und/oder wobei das Dekodieren der mindestens einen der Vielzahl von Medienzugriffssteuerungs-Dienstdateneinheiten Dekodieren der Medienzugriffssteuerungs-Dienstdateneinheiten während Sicherungsschicht-Verarbeitung umfasst.

15. Verfahren nach Anspruch 13, wobei das Dekodieren jeder der Medienzugriffssteuerungs-Dienstdateneinheiten Zurücksetzen einer Zustandsmaschine, die mit einem Detektor des Rahmens verknüpft ist, in einen Null-Zustand umfasst, basierend zumindest teilweise auf dem einen oder den mehreren Tail-Bits, bevor nachfolgende Medienzugriffssteuerungs-Dienstdateneinheiten in dem Rahmen verarbeitet werden.

16. Verfahren nach Anspruch 13, ferner umfassend:
Bestimmen, dass die Schnittstellenschaltung (308) kein Ziel für mindestens eine Medienzugriffssteuerungs-Dienstdateneinheit der Vielzahl von Medienzugriffssteuerungs-Dienstdateneinheiten ist, basierend zumindest teilweise auf dem aggregierten Medienzugriffssteuerungs-Header; und
Verwerfen des Rahmens in Reaktion auf Bestimmen, dass die Schnittstellenschaltung (308) nicht das Ziel für die mindestens eine Medienzugriffssteuerungs-Dienstdateneinheit der Vielzahl von Medienzugriffssteuerungs-Dienstdateneinheiten ist; und/oder
Erfassen eines Fehlers in dem Rahmen basierend zumindest teilweise auf dem aggregierten Medienzugriffssteuerungs-Header; und
Verwerfen des Rahmens in Reaktion auf das Erfassen des Fehlers.

## Revendications

1. Un dispositif électronique (302), comprenant une antenne ; et
un circuit d'interface (308) couplé à l'antenne et configuré pour communiquer avec un autre dispositif électronique (304) et pour :
combiner une pluralité d'entêtes de contrôle d'accès au support correspondant à une pluralité d'unités de données de service de contrôle d'accès au support pour donner un entête agrégé de contrôle d'accès au support, l'entête agrégé de contrôle d'accès au support comprenant au moins une adresse de récepteur, une adresse d'émetteur, et une information de longueur correspondant à la pluralité d'unités de données de service de contrôle d'accès au support ;
insérer dans une première partie d'une trame l'entête agrégé de contrôle d'accès au support ;
insérer dans une seconde partie de la trame la pluralité d'unités de données de service de contrôle d'accès au support, la pluralité d'unités de données de service de contrôle d'accès au support étant insérées après l'entête agrégé de contrôle d'accès au support inséré dans la première partie de la trame ;
adjoindre un ou plusieurs bits de fin à la trame après au moins l'une de la pluralité d'unités de données de service de contrôle d'accès au support de la trame,
les un ou plusieurs bits de fin remettant à zéro l'état d'un décodeur en réponse au décodage de la trame ; et
émettre la trame.

2. Le dispositif électronique (302) de la revendication 1, dans lequel le circuit d'interface (308) est configuré pour combiner la pluralité d'entêtes de contrôle d'accès au support pour donner l'entête agrégé de contrôle d'accès au support pendant un traitement de couche de liaison de données de la trame.

3. Le dispositif électronique (302) de la revendication 1, dans lequel un schéma de modulation et de codage de l'entête agrégé de contrôle d'accès au support spécifié dans la trame est différent d'un schéma de modulation et de codage des unités de données de service de contrôle d'accès au support spécifié dans la trame.

4. Le dispositif électronique (302) de la revendication 1, dans lequel :
le circuit d'interface (308) est configuré pour adjoindre les un ou plusieurs bits de fin pendant un traitement de couche physique ; et/ou
le circuit d'interface (308) est configuré pour adjoindre les un ou plusieurs bits de fin pendant un traitement de couche de liaison de données.

5. Un procédé, comprenant :
la combinaison, par un circuit d'interface (308) couplé à une antenne, d'une pluralité d'entêtes de contrôle d'accès au support correspondant à une pluralité d'unités de données de service de contrôle d'accès au support pour donner un entête agrégé de contrôle d'accès au support, l'entête agrégé de contrôle d'accès au support comprenant au moins une adresse de récepteur, une adresse d'émetteur, et une information de longueur correspondant à la pluralité d'unités de données de service de contrôle d'accès au support ;
l'insertion dans une première partie d'une trame de l'entête agrégé de contrôle d'accès au support ;
l'insertion dans une seconde partie de la trame de la pluralité d'unités de données de service de contrôle d'accès au support, la pluralité d'unités de données de service de contrôle d'accès au support étant insérées après l'entête agrégé de contrôle d'accès au support inséré dans la première partie de la trame ;
l'adjonction d'un ou de plusieurs bits de fin à la trame après au moins l'une de la pluralité d'unités de données de service de contrôle d'accès au support de la trame, les un ou plusieurs bits de fin remettant à zéro l'état d'un décodeur en réponse au décodage de la trame ; et
l'émission de la trame.

6. Le procédé de la revendication 5, dans lequel la combinaison comprend la combinaison de la pluralité d'entêtes de contrôle d'accès au support pour donner l'entête agrégé de contrôle d'accès au support pendant un traitement de couche de liaison de données des unités de données de service de contrôle d'accès au support.

7. Le procédé de la revendication 5, dans lequel un schéma de modulation et de codage de l'entête agrégé de contrôle d'accès au support spécifié dans la trame est différent d'un schéma de modulation et de codage des unités de données de service de contrôle d'accès au support spécifié dans la trame.

8. Le procédé de la revendication 5,
dans lequel l'adjonction comprend l'adjonction des un ou plusieurs bits de fin pendant un traitement de couche physique,
dans lequel l'adjonction comprend l'adjonction des un ou plusieurs bits de fin pendant un traitement de couche de liaison de données ; et/ou
un bourrage de zéros de couche physique est adjoint à une extrémité de la trame avant l'émission de la trame.

9. Un dispositif électronique (302), comprenant :
une antenne ; et
un circuit d'interface (308) couplé à l'antenne et
configuré pour :
recevoir, via l'antenne, une trame qui comprend une pluralité d'unités de données de service de contrôle d'accès au support et un entête agrégé de contrôle d'accès au support comprenant une combinaison d'une pluralité d'entêtes de contrôle d'accès au support correspondant à la pluralité d'unités de données de service de contrôle d'accès au support, et un ou plusieurs bits de fin après au moins l'une de la pluralité d'unités de données de service de contrôle d'accès au support de la trame,
dans lequel l'entête agrégé de contrôle d'accès au support d'accès au support est situé dans une première partie de la trame et comprend au moins une adresse de récepteur, une adresse d'émetteur, et une information de longueur correspondant à la pluralité d'unités de données de service de contrôle d'accès au support ;
dans lequel la pluralité d'unités de données de service de contrôle d'accès au support sont incluses dans une seconde partie de la trame après l'entête agrégé de contrôle d'accès au support de la première partie de la trame ;
décoder l'entête agrégé de contrôle d'accès au support pour accéder à l'information de longueur pour la pluralité d'unités de données de service de contrôle d'accès au support de la trame ;
décoder l'au moins une de la pluralité d'unités de données de service de contrôle d'accès au support distinctement les unes des autres ; et
transférer à une couche de liaison de données l'unité de données de service de contrôle d'accès au support décodée.

10. Le dispositif électronique (302) de la revendication 9,
dans lequel le circuit d'interface (308) est configuré pour décoder l'entête agrégé de contrôle d'accès au support pendant un traitement de couche physique ; et/ou dans lequel le circuit d'interface (308) est configuré pour détecter des unités de données de service de contrôle d'accès au support pendant un traitement de couche physique.

11. Le dispositif électronique (302) de la revendication 9, dans lequel le circuit d'interface (308) comprend une machine à états associée à un détecteur de la trame, et dans lequel la machine à états est configurée pour revenir à un état zéro au moins en partie sur la base des un ou plusieurs bits de fin avant de traiter des unités de données de service de contrôle d'accès au support ultérieures de la trame.

12. Le dispositif électronique (302) de la revendication 9, dans lequel le circuit d'interface (308) est en outre configuré pour :
déterminer que le dispositif électronique (302) n'est pas une destination pour au moins une unité de données de service de contrôle d'accès au support de la pluralité d'unités de données de service de contrôle d'accès au support au moins en partie sur la base d'une information de destination stockée dans l'entête agrégé de contrôle d'accès au support ; et
ignorer la trame en réponse à la détermination que le dispositif électronique (302) n'est pas la destination pour l'au moins une unité de données de service de contrôle d'accès au support de la pluralité d'unités de données de service de contrôle d'accès au support ; et/ou dans lequel le circuit d'interface (308) est en outre configuré pour :
détecter une erreur dans la trame au moins en partie sur la base de l'entête agrégé de contrôle d'accès au support ; et
ignorer la trame en réponse à la détection de l'erreur.

13. Un procédé, comprenant :
la réception, par une l'antenne, d'une trame qui comprend une pluralité d'unités de données de service de contrôle d'accès au support et un entête agrégé de contrôle d'accès au support comprenant une combinaison d'une pluralité d'entêtes de contrôle d'accès au support correspondant à la pluralité d'unités de données de service de contrôle d'accès au support, et un ou plusieurs bits de fin après au moins l'une de la pluralité d'unités de données de service de contrôle d'accès au support,
dans lequel l'entête agrégé de contrôle d'accès au support d'accès au support est situé dans une première partie de la trame et comprend au moins une adresse de récepteur, une adresse d'émetteur, et une information de longueur correspondant à la pluralité d'unités de données de service de contrôle d'accès au support ;
dans lequel la pluralité d'unités de données de service de contrôle d'accès au support sont incluses dans une seconde partie de la trame après l'entête agrégé de contrôle d'accès au support de la première partie de la trame ;
le décodage, par un circuit d'interface (308), de l'entête agrégé de contrôle d'accès au support pour accéder à l'information de longueur pour la pluralité d'unités de données de service de contrôle d'accès au support de la trame ;
le décodage, par le circuit d'interface (308), d'au moins l'une de la pluralité d'unités de données de service de contrôle d'accès au support distinctement les unes des autres ; et
le transfert, par le circuit d'interface (308), à une couche de liaison de données de l'unité de données de service de contrôle d'accès au support décodée.

14. Le procédé de la revendication 13,
dans lequel le décodage de l'entête agrégé de contrôle d'accès au support comprend le décodage de l'entête agrégé de contrôle d'accès au support pendant un traitement de couche physique ; et/ou
dans lequel le décodage de l'au moins une de la pluralité d'unités de données de service de contrôle d'accès au support comprend le décodage des unités de données de service de contrôle d'accès au support pendant un traitement de couche de liaison de données.

15. Le procédé de la revendication 13, dans lequel le décodage de chacune des unités de données de service de contrôle d'accès au support comprend la remise à l'état zéro d'une machine à états associée à un détecteur de la trame au moins en partie sur la base des un ou plusieurs bits de fin avant de traiter des unités de données de service de contrôle d'accès au support ultérieures de la trame.

16. Le procédé de la revendication 13, comprenant en outre :
la détermination que le circuit d'interface (308) n'est pas une destination pour au moins une unité de données de service de contrôle d'accès au support de la pluralité d'unités de données de service de contrôle d'accès au support au moins en partie sur la base d'une information de destination stockée dans l'entête agrégé de contrôle d'accès au support ; et
l'ignorance de la trame en réponse à la détermination que le circuit d'interface (308) n'est pas la destination pour l'au moins une unité de données de service de contrôle d'accès au support de la pluralité d'unités de données de service de contrôle d'accès au support ; et/ou la détection d'une erreur dans la trame au moins en partie sur la base de l'entête agrégé de contrôle d'accès au support ; et
l'ignorance de la trame en réponse à la détection de l'erreur.
